# EUROPÄISCHE PATENTSCHRIFT

(11) **EP 3 001 386 B1**
(45) Veröffentlichungstag und Bekanntmachung des Hinweises auf die Patenterteilung: **24.01.2024**
(21) Anmeldenummer: 14186901.6
(22) Anmeldetag: 29.09.2014
(51) Int. Cl.: G07B 15/06, G06F 21/31

(54) **SYSTEM UND VERFAHREN ZUR INITIALISIERUNG EINES BORDGERÄTS**
SYSTEM AND METHOD FOR INITIALISATION OF AN ON-BOARD DEVICE
SYSTÈME ET PROCÉDÉ D'INITIALISATION D'UN APPAREIL EMBARQUÉ

(43) Veröffentlichungstag der Anmeldung: 30.03.2016
(73) Patentinhaber: Toll Collect GmbH, 10785 Berlin (DE)
(72) Erfinder: Erichsen, Mark, 10115 Berlin (DE)
(74) Vertreter: Maikowski & Ninnemann Patentanwälte Partnerschaft mbB

(56) Entgegenhaltungen:
- EP-A1- 1 870 302
- EP-A1- 2 249 313
- EP-A1- 2 782 071
- WO-A1-2006/050543
- WO-A1-2006/050543
- WO-A1-2014/043326
- DE-A1-102013 003 044
- US-A1- 2013 120 110

## Beschreibung

Die vorliegende Erfindung betrifft ein System gemäß dem Oberbegriff des Patentanspruchs 1 und ein Verfahren zum Initialisieren eines Bordgeräts in einem System mit wenigstens einer zentralen Datenverarbeitungsanlage gemäß dem Oberbegriff des Patentanspruchs 10.

Insbesondere betrifft die vorliegende Erfindung eine Initialisierung eines Bordgeräts, das für die Zwecke einer dezentralen oder zentralen Mauterkennung geeignet ist.

Bordgeräte für die Zwecke einer dezentralen oder zentralen Mauterkennung sind aus dem Stand der Technik bekannt. Gelegentlich wird dabei auch von sogenannten On-Board-Units (OBU) gesprochen.

Ein solches Bordgerät ist zum Mitführen in einem Fahrzeug, wie einem LKW oder einem PKW oder einem Motorrad, ausgebildet. Beispielsweise wird das Bordgerät an einem dafür vorgesehenen Platz im Fahrercockpit mechanisch und versorgungstechnisch fest installiert oder aber an einer Windschutzscheibe angebracht.

Ein Bordgerät kann einen nicht-initialisierten Zustand aufweisen, in welchem die Ausführung wenigstens eines einer Bordgerätefunktion dienlichen vorbestimmten Prozesses durch das Bordgerät nicht möglich ist. Diesen nicht-initialisierten Zustand weist das Bordgerät beispielsweise dann auf, wenn eine Zuordnung zwischen dem Bordgerät einerseits und dem Fahrzeug, in welchem es mitgeführt wird, und/oder dem Benutzer des Bordgeräts andererseits zentralseitig noch nicht hinterlegt ist.

Ein Bordgerät kann weiter einen initialisierten Zustand aufweisen, bei welchem die Ausführung des vorbestimmten Prozesses durch das Bordgerät möglich ist. Im initialisierten Zustand ist die Zuordnung zwischen dem Bordgerät einerseits und dem Fahrzeug, in welchem es mitgeführt wird, und/oder dem Benutzer andererseits hinterlegt.

Üblicherweise weist ein Bordgerät eine Kommunikationseinheit auf, die zum drahtlosen Empfangen und Senden von Daten über ein Mobilfunkkommunikationssystem ausgebildet ist. Beispielsweise handelt es sich bei der Kommunikationseinheit um ein GSM-Modul, das mit dem GSM-System kommunizieren kann.

Ein solches Bordgerät weist des Weiteren gelegentlich eine Anzeigeeinheit auf, die einen Kennzeichencode anzeigen kann. Bei dem Kennzeichencode handelt es sich beispielsweise um einen Code, der indikativ für ein Kennzeichen des Fahrzeugs und/oder ein Kennzeichen des Benutzers des Bordgeräts ist. Auf diese Weise kann dem Benutzer des Bordgeräts angezeigt werden, dass bordgerätintern die Zuordnung zwischen dem Bordgerät einerseits und dem Fahrzeug, in welchem es mitgeführt wird, andererseits, hinterlegt ist, das Bordgerät also den initialisierten Zustand aufweist. Beispielsweise zeigt die Anzeigeeinheit also das Kennzeichen des Fahrzeugs an, beispielsweise "B-TC 2014", oder ein anderes amtliches Kennzeichen.

Ferner weist ein solches Bordgerät üblicherweise eine wenigstens an die Kommunikationseinheit gekoppelte Steuereinheit auf, die den Betrieb des Bordgeräts steuert.

Um sicherzustellen, dass der der Bordgerätefunktion dienliche Prozess ausgeführt werden kann, muss das Bordgerät in den initialisierten Zustand überführt werden, also initialisiert werden. Dazu kann es erforderlich sein, dass bestimmte Parameter auf dem Bordgerät hinterlegt werden, beispielsweise solche, die für die Ausführung des Prozesses benötigt werden.

Bezogen auf das Beispiel von Bordgeräten in Gestalt von Mautgeräten erfolgt eine derartige Hinterlegung von Parametern gemäß Stand der Technik beispielsweise vor dem Einbau der Bordgeräte durch eine zugelassene Werkstatt oder an dafür vorgesehenen speziellen Servicestellen, beispielsweise bei bestimmten Automaten. Üblicherweise werden die Parameter entweder drahtgebunden dem Bordgerät zugeführt oder gemäß einer Nahbereichsfunktechnik.

Problematisch dabei ist es, dass auf diese Weise eine Vielzahl von Bordgeräten dezentral initialisiert werden muss. Es ist also erforderlich, dass ein Erwerber eines nicht-initialisierten Bordgeräts eine von möglicherweise mehreren dezentralen Stellen aufsucht, um dort die maut-relevanten Daten, die zur Initialisierung erforderlich sind, drahtgebunden oder aber über den Nahbereichsfunk zu empfangen.

Zum einen ist also der Aufwand von Erwerbern bzw. Benutzern der Bordgeräte zum Überführen des Bordgeräts in den initialisierten Zustand nicht unerheblich, und zum anderen ist die Verwaltung der Vielzahl im Umlauf befindlicher Bordgeräte hinsichtlich der Frage, ob jene sich im initialisierten Zustand oder im nicht-initialisierten Zustand befinden, zentralseitig aufwendig.

Die EP 1 870 302 A1 offenbart ein System zum Personalisieren einer OBU. Dabei erfolgt der Personalisierungsvorgang dezentral innerhalb der OBU, nachdem für die OBU eine Personalisierungs-Software und für die Personalisierung relevante Daten bereitgestellt worden sind. Dies wird mittels einer Datenübertragung über eine zusätzliche Personalisierungs-Schnittstelle der OBU ausgeführt. Die Personalisierung soll damit dezentral durch einen Benutzer der OBU erfolgen und nicht auf Fachpersonal angewiesen sein.

Die EP 1 810 112 B1 beschreibt ein Verfahren zur benutzerspezifischen Initialisierung eines Bordgeräts. Dabei ist eine zentrale Einrichtung vorgesehen. Jedes Bordgerät hat im Auslieferungszustand eine eindeutige Geräteidentifikation, welcher in der zentralen Einrichtung eine eindeutige Benutzeridentifikation zugeordnet ist. Die zentrale Einrichtung generiert aus der Geräteidentifikation und der Benutzeridentifikation einen Initialisierungs-PIN und übermittelt diesen an das betreffende Bordgerät. Das Bordgerät berechnet anhand seiner Geräteidentifikation und anhand des empfangenen Initialisierungs-PINs die Benutzeridentifikation zur benutzerspezifischen Initialisierung. Dabei kann vorgesehen sein, dass das Bordgerät die berechnete Benutzeridentifikation anzeigt.

Aus der EP 2 128 825 A2 ist ein Verfahren zum Einrichten eines Mauterfassungsgeräts bekannt. Dabei fragt das Mauterfassungsgerät von einem Server maut-relevante Fahrzeugdaten durch Übermittlung einer eindeutigen Kennung des Fahrzeugs, in dem das Mauterfassungsgerät angeordnet ist, ab und speichert die maut-relevanten Daten in einen Speicher des Mauterfassungsgeräts.

Die EP 2 249 313 B1 stellt ein Verfahren zur nutzungsspezifischen Initialisierung von Fahrzeuggeräten eines Straßenmautsystems vor. Die Initialisierung des Fahrzeuggeräts erfolgt über ein Zuordnen einer Nutzerkennung in einer Zentrale zu einer Fahrerkennung und einer Fahrzeugkennung. Die Nutzerkennung wird in das Fahrzeuggerät eingegeben und das Fahrzeuggerät sendet die Nutzerkennung an die Zentrale. Die Zentrale sendet die zugehörige Fahrerkennung und Fahrzeugkennung an das Fahrzeuggerät zurück.

Aufgabe der vorliegenden Erfindung ist es, Mittel bereitzustellen, die eine benutzerfreundliche und verwaltungstechnisch wenig aufwendige Initialisierung von Bordgeräten erlaubt.

Gemäß einem ersten Aspekt wird das System des Patentanspruchs 1 vorgeschlagen. Einen weiteren Aspekt bildet das Verfahren zum Initialisieren eines Bordgeräts in einem System mit wenigstens einer zentralen Datenverarbeitungsanlage gemäß dem Patentanspruch 10. Merkmale vorteilhafter Ausführungsformen sind in den Unteransprüchen angegeben. Auf sämtliche der vorstehend genannten Aspekte wird nachfolgend Bezug genommen.

Bei dem Bordgerät des Systems des ersten Aspektes ist die Steuereinheit im nicht-initialisierten Zustand des Bordgerätes ausgebildet zum Veranlassen einer Ausgabe eines dem Bordgerät zugeordneten und von dem Bordgerät bereitgestellten Initialisierungscodes an einen Benutzer des Bordgeräts mittels einer Anzeigeeinheit. Außerdem ist die Steuereinheit ausgebildet zum Überführen des Bordgeräts in den initialisierten Zustand durch Initialisieren des Bordgeräts in Abhängigkeit von Initialisierungsdaten, die in einer von der Kommunikationseinheit empfangenen Initialisierungsnachricht einer vom Bordgerät beabstandeten zentralen Datenverarbeitungsanlage des Systems enthalten sind.

Die zentrale Datenverarbeitungsanlage des Systems umfasst einen Empfänger, der zum Empfangen des dem Bordgerät zugeordneten Initialisierungscodes von einem einem Benutzer zur Verfügung stehenden Endgerät ausgebildet ist, und einen Server, der in Wirkverbindung mit dem Empfänger steht und der ausgebildet ist zum Bereitstellen von Initialisierungsdaten in Abhängigkeit von dem empfangenen Initialisierungscode. Die zentrale Datenverarbeitungsanlage umfasst ferner eine Übertragungseinrichtung, wobei die zentrale Datenverarbeitungsanlage ausgebildet ist, die Übertragungseinrichtung zu veranlassen, eine die Initialisierungsdaten beinhaltenden Initialisierungsnachricht über ein Mobilfunkkommunikationssystem an das wenigstens eine Bordgerät zu versenden.

Erfindungsgemäß sind die Initialisierungsdaten derart ausgestaltet, dass das wenigstens eine Bordgerät basierend auf den Initialisierungsdaten von einem nicht-initialisierten Zustand, in welchem die Ausführung wenigstens eines einer Bordgerätefunktion dienlichen vorbestimmten Prozesses durch das wenigstens eine Bordgerät nicht möglich ist, in einen initialisierten Zustand, bei welchem die Ausführung des vorbestimmten Prozesses durch das wenigstens eine Bordgerät möglich ist, übergehen kann.

Das Verfahren des weiteren Aspektes stellt ein Verfahren zum Initialisieren eines Bordgeräts in einem System mit wenigstens einer zentralen Datenverarbeitungsanlage und wenigstens einem einem Benutzer zur Verfügung stehenden, vom Bordgerät beabstandeten Endgerät dar, wobei das Bordgerät zum Mitführen in einem Fahrzeug ausgebildet ist und einen nicht-initialisierten Zustand, in welchem die Ausführung wenigstens eines einer Bordgerätefunktion dienlichen vorbestimmten Prozesses durch das Bordgerät nicht möglich ist, oder einen initialisierten Zustand, bei welchem die Ausführung des vorbestimmten Prozesses durch das Bordgerät möglich ist, aufweisen kann, und wobei das Bordgerät eine Kommunikationseinheit, die ausgebildet ist zum drahtlosen Empfangen und Senden von Daten über ein Mobilfunkkommunikationssystem, umfasst sowie eine an die Kommunikationseinheit gekoppelte Steuereinheit zum Steuern des Betriebs des Bordgeräts. Das Verfahren weist die folgenden Schritte auf:
- mittels der Steuereinheit: Veranlassen einer Ausgabe eines dem Bordgerät zugeordneten Initialisierungscodes an einen Benutzer des Bordgeräts im nicht-initialisierten Zustand des Bordgerätes;
- Eingabe des Initialisierungscodes in das Endgerät;
- in der zentralen Datenverarbeitungsanlage: Empfangen des Initialisierungscodes von dem Endgerät, Bereitstellen von Initialisierungsdaten in Abhängigkeit von dem empfangenen Initialisierungscode und Versenden einer die Initialisierungsdaten beinhaltenden Initialisierungsnachricht über das Mobilfunkkommunikationssystem an das Bordgerät;
- mittels der Steuereinheit: Überführen des Bordgeräts in den initialisierten Zustand durch Initialisieren des Bordgeräts in Abhängigkeit von den Initialisierungsdaten, die in der von der Kommunikationseinheit empfangenen Initialisierungsnachricht der zentralen Datenverarbeitungsanlage enthalten sind.

Vorzugsweise werden in der zentralen Datenverarbeitungsanlage zusätzlich zu dem Initialisierungscode auch benutzer- und/oder fahrzeugbezogene Daten von dem Endgerät empfangen, und die Initialisierungsdaten umfassen zumindest teilweise, vorzugsweise in Gänze, die empfangenen benutzer- und/oder fahrzeugbezogene Daten.

Erfindungsgemäß können Benutzer der Bordgeräte selbige in einem nicht-initialisierten Zustand beziehen und bei der Inbetriebnahme die Initialisierung selbst und ohne Fachpersonal in einfacher Weise veranlassen, so dass eine nachfolgende Ausführung des wenigstens einen der Bordgerätefunktion dienlichen vorbestimmten Prozesses durch das Bordgerät möglich ist.

Beispielsweise handelt es sich bei der Bordgerätefunktion um eine Funktion zur Mauterkennung, beispielsweise um eine Funktion, bei der vom Bordgerät empfangene Positionsdaten auf die mögliche Befahrung eines mautpflichtigen Gebietes oder eines mautpflichtigen Streckenabschnittes ausgewertet werden. Der der Bordgerätefunktion, beispielsweise ein der Funktion zur Mauterkennung, dienliche Prozess umfasst beispielsweise das Versenden von Positionsdaten einer Positionsbestimmungseinrichtung und/oder ein Verarbeitungsergebnis (beispielsweise eine Kennung eines als befahren erkannten mautpflichtigen Streckenabschnitts) der Positionsdaten an die zentrale Datenverarbeitungsanlage, wobei das Bordgerät die Positionsbestimmungseinrichtung umfassen kann oder für eine Ankopplung an die Positionsbestimmungseinrichtung ausgebildet sein kann.

Das Bordgerät ist eindeutig mit dem Initialisierungscode verknüpft. Das Bereitstellen des Initialisierungscodes kann in verschiedenen Weisen erfolgen. Beispielsweise umfasst das Bordgerät zum Bereitstellen des Initialisierungscodes einen Codegenerator. Beispielsweise erzeugt der Codegenerator den Initialisierungscode in Abhängigkeit von einer auf dem Bordgerät hinterlegten unveränderbaren Seriennummer des Bordgeräts und/oder in Abhängigkeit von einer unveränderbaren Seriennummer einer Komponente des Bordgeräts. Damit ist gewährleistet, dass der Initialisierungscode nur von einem einzigen Bordgerät und keinen anderen Bordgeräten verwendet wird.

Bei einem anderen Beispiel empfängt das Bordgerät den Initialisierungscode von einer bordgeräteexternen Einrichtung und speichert den empfangenen Initialisierungscode, wobei das Bereitstellen des Initialisierungscodes durch Abrufen des gespeicherten Initialisierungscodes aus dem entsprechenden Speicher erfolgen kann. Beispielsweise ist die Steuereinheit des Bordgerätes ausgebildet, nach jedem Einschalten des Bordgerätes oder nach jedem erneuten Anschluss des Bordgerätes an eine Stromversorgungseinrichtung im nicht-initialisierten Zustand des Bordgerätes mittels der Kommunikationseinheit des Bordgerätes eine Inbetriebnahme-Meldung an die zentrale Datenverarbeitungsanlage zu senden und daraufhin mittels der Kommunikationseinheit den Initialisierungscode oder sonstige Software (Daten und/oder wenigstens ein Programm) zur Generierung desselben von der zentralen Datenverarbeitungsanlage zu empfangen.

Insbesondere können Initialisierungscodes, die von dem Bordgerät im Zuge zweier aufeinanderfolgender Bereitstellungen im nicht-initialisierten Zustand ausgegeben werden, unterschiedlich sein. Damit wird erreicht, dass das Bordgerät nur durch den Benutzer initialisierbar ist, der das Bordgerät während des Initialisierungsprozesses in Betrieb (eingeschaltet und/ oder mit Strom versorgt) gehalten hat, weil das Bordgerät außer Betrieb nicht in der Lage ist, die Initialisierungsdaten von der zentralen Datenverarbeitungsanlage zu empfangen und/ oder zu verarbeiten.

Indes muss der Initialisierungscode von dem Bordgerät nicht notwendigerweise dauerhaft gespeichert werden. Eine auch sehr kurzfristige Zwischenspeicherung kann ausreichend sein. Insbesondere kann das Bereitstellen des Initialisierungscodes auch ohne Speicherung des Initialisierungscodes im Bordgerät erfolgen.

Die Ausgabe des Initialisierungscodes an den Benutzer erfolgt erfindungsgemäß optisch mittels einer Anzeigeeinheit des Bordgeräts.

Beispielsweise wird der an den Benutzer ausgegebene Initialisierungscode in ein Endgerät des Benutzers eingegeben. Dies kann manuell über eine Tastatur des Endgerätes erfolgen, optisch über eine Kamera des Endgerätes (beispielsweise, wenn der Initialisierungscode ein durch eine optische Anzeigeeinheit des Bordgerätes angezeigter Bar-Code oder QR-Code ist) oder kommunikationstechnisch über eine Kommunikationsschnittstelle zur drahtlosen Kommunikation (beispielsweise einen Mikrowellen-Sendeempfänger (z. B. Bluetooth) oder einen Infrarot-Sendeempfänger).

Das Endgerät ist bevorzugt ein Benutzerendgerät, beispielsweise ein mobiles Endgerät, beispielsweise ein Smart-Phone oder ein ähnliches multifunktionales Endgerät. Es kann sich bei dem Endgerät aber auch um einen üblichen PC, um ein Notebook oder um ein ähnliches Datenverarbeitungsmittel in Gestalt eines Benutzerendgeräts handeln.

Der an den Benutzer ausgegebene Initialisierungscode wird beispielsweise über das Endgerät von einem Empfänger der zentralen Datenverarbeitungsanlage empfangen. Dazu kann beispielsweise vorgesehen sein, dass der Empfänger eine Portaleinrichtung umfasst, die ein über das Internet zugängliches Netzwerkbenutzerportal bereitstellt, auf das beispielsweise mittels eines Internetbrowsers des Endgerätes des Benutzers zugegriffen werden kann. Über das Endgerät kann der Benutzer den ausgegebenen Initialisierungscode zusammen mit fahrzeug- und/oder benutzerbezogenen Daten auf einer Website des Netzwerkbenutzerportals eingeben, die der Internetbrowser auf dem Endgerät anzeigt.

Es kann auch vorgesehen sein, dass der Empfänger der zentralen Datenverarbeitungsanlage ausgebildet ist, den Initialisierungscode von dem Endgerät des Benutzers (direkt) zu empfangen, auf welchem eine Initialisierungsanwendung abläuft, die den in das Endgerät eingegebenen oder den vom Endgerät empfangenen Initialisierungscode zur Übermittlung an den Empfänger an eine Kommunikationsschnittstelle des Endgerätes übergibt. Diese Art der Datenübermittlung kann auch ohne einen Internetbrowser und ohne eine Website der zuvor genannten Art erfolgen.

Vorzugsweise werden zusätzlich zu dem Initialisierungscode benutzer- und/oder fahrzeugbezogene Daten in das Endgerät eingegeben oder vom Endgerät empfangen und zusätzlich zu dem Initialisierungscode von dem Endgerät an die zentrale Datenverarbeitungsanlage übertragen. Durch benutzerbezogene Daten kann sich der Benutzer gegenüber der zentralen Datenverarbeitungsanlage als ein eindeutiger Benutzer identifizieren, anmelden oder registrieren. Fahrzeugbezogene Daten spezifizieren das Fahrzeug und/ oder dessen Fahrzeugparameter, die mit dem Bordgerät, das durch den Initialisierungscode eindeutig identifiziert ist, zu verknüpfen sind.

Beispielsweise erstellt die zentrale Datenverarbeitungsanlage die Initialisierungsnachricht, die die Initialisierungsdaten beinhaltet.

Vorzugseise wird die Initialisierungsnachricht von der vom Bordgerät beabstandeten zentralen Datenverarbeitungsanlage in Antwort auf eine Eingabe des Initialisierungscodes in das vom Bordgerät beabstandete Endgerät des Benutzers hin über das Mobilfunkkommunikationssystem für das Bordgerät bereitgestellt. Die Initialisierungsnachricht wird über das Mobilfunkkommunikationssystem an das Bordgerät gesendet. Basierend auf den Initialisierungsdaten initialisiert sich das Bordgerät dann selbst und nimmt somit den initialisierten Zustand ein, in welchem die Ausführung des wenigstens einen der Bordgerätefunktion dienlichen vorbestimmten Prozesses durch das Bordgerät möglich ist.

Ist das Bordgerät bereits vor der Eingabe des Initialisierungscodes in das Endgerät zentralseitig mit einem Benutzer verknüpft, beispielsweise durch Zuordnung einer Bordgerät-Kennung zu einer Benutzer-Kennung, beispielsweise den benutzerbezogenen Daten, so kann die zentrale Datenverarbeitungsanlage anhand der im Initialisierungsprozess zusätzlich übermittelten benutzerbezogenen Daten überprüfen, ob der eingegebene Initialisierungscode tatsächlich dem eines mit dem Benutzer verknüpften Bordgerätes entspricht. Dies ist eine mögliche Maßnahme zur Erkennung eines Eingabefehlers bei der Eingabe des Initialisierungscodes. Liegt keine entsprechende Verknüpfung vor, gibt die zentrale Datenverarbeitungsanlage einen Fehler aus und unterlässt die Übermittlung der Initialisierungsnachricht an ein dem falschen Initialisierungscode gegebenenfalls entsprechendes Bordgerät.

Bei dem Bordgerät handelt es sich beispielsweise um eine OBU (on-board unit). Das Bordgerät kann für eine mechanische und versorgungstechnische Ankoppelung an ein dafür ausgebildetes und im Fahrzeug befindliches Ankopplungsmittel ausgestaltet sein. Beispielsweise ist im Fahrzeug ein entsprechender Einschubschacht mit den entsprechenden mechanischen und versorgungstechnischen Anschlüssen vorgesehen. Das Bordgerät kann aber auch an einer Windschutzscheibe des Fahrzeugs befestigt werden und mittels einer Kabelverbindung, beispielsweise einer Verbindung zum elektrischen Anschluss eines Zigarettenanzünders des Fahrzeugs, Versorgungsstrom beziehen.

Beispielsweise speichert die Steuereinheit im Rahmen der Initialisierung des Bordgeräts die Initialisierungsdaten und/oder davon abgeleitete Daten, beispielsweise bestimmte Parameter, in einer Speichereinrichtung des Bordgeräts. Beispielsweise ist erst nach der Speicherung der Initialisierungsdaten und/oder der davon abgeleiteten Daten die Ausführung des wenigstens einen der Bordgerätefunktion dienlichen vorbestimmten Prozesses durch das Bordgerät möglich.

Die Initialisierungsdaten umfassen beispielsweise fahrzeugbezogene Daten. Zu den fahrzeugbezogenen Daten können fahrzeugidentifizierende und fahrzeugspezifizierende Daten zählen. Fahrzeugidentifizierende Daten können beispielsweise ein Kennzeichen des Fahrzeugs, das mit dem auf dem Nummernschild des Fahrzeugs befindlichen Kennzeichen übereinstimmt, umfassen und/oder eine Versicherungsnummer des Fahrzeugs und/oder eine Fahrgestellnummer des Fahrzeugs. Von den fahrzeugspezifizierenden Daten können eine Fahrzeugklasse des Fahrzeugs, eine Schadstoffklasse des Fahrzeugs, eine Achszahl oder Achsklasse des Fahrzeugs und/oder ein zulässiges Gesamtgewicht des Fahrzeugs umfasst sein.

Alternativ oder kumulativ zu den fahrzeugbezogenen Daten können die Initialisierungsdaten auch benutzerbezogene Daten, beispielsweise eine Benutzerkennung, einen Benutzernamen, ein Benutzer-Passwort und/ der aus diesen benutzerbezogenen Daten kryptographisch abgeleitete Daten umfassen.

Vorzugsweise entsprechen von den Initialisierungsdaten umfasste fahrzeug- und/ oder benutzerbezogene Daten den fahrzeug- und/oder nutzerbezogenen Daten, die von dem Endgerät zusätzlich zu dem Initialisierungscode an die zentrale Datenverarbeitungsanlage übertragen wurden.

Von den Initialisierungsdaten abgeleitete Daten können von Initialisierungsdaten kryptographisch abgeleitete Daten, beispielsweise verschlüsselte Initialisierungsdaten, ein Hashwert der Initialisierungsdaten usw., umfassen und/oder einen Binärwert im Sinne eines Initialisierungs-Flags, der einen initialisierten Zustand des Bordgerätes repräsentiert.

Bei einer Ausführungsform des Bordgeräts umfasst das Bordgerät eine Statusanzeige und ist ausgebildet, mittels der Statusanzeige anzuzeigen, in welchem Zustand es sich befindet. Beispielsweise zeigt eine rotleuchtende Lampe der Statusanzeige an, dass sich das Bordgerät im nicht-initialisierten Zustand befindet. Beispielsweise zeigt eine grünleuchtende Lampe der Statusanzeige an, dass sich das Bordgerät im initialisierten Zustand befindet.

Gemäß der Erfindung umfasst das Bordgerät eine an die Steuereinheit gekoppelte Anzeigeeinheit, wobei die Steuereinheit ausgebildet ist, die Anzeigeeinheit zu veranlassen, den Initialisierungscode anzuzeigen. Auf diese Weise wird die Ausgabe des Initialisierungscodes an den Benutzer bewirkt.

Bei einer Ausführungsform ist die Steuereinheit ausgebildet, die Anzeigeeinheit zu veranlassen, in Abhängigkeit von dem Zustand des Bordgeräts wahlweise den Initialisierungscode oder einen Kennzeichencode anzuzeigen, wobei der Kennzeichencode indikativ ist für ein Kennzeichen des Fahrzeugs und/oder ein Kennzeichen eines Benutzers des Bordgeräts.

Das Bordgerät ist erfindungsgemäß derart ausgebildet, dass es den Initialisierungscode nur dann anzeigt, wenn es sich in dem nicht-initialisierten Zustand befindet. Hat das Bordgerät indes die Initialisierung basierend auf den Initialisierungsdaten erfolgreich durchgeführt, so zeigt das Bordgerät nicht den Initialisierungscode an. Stattdessen kann der Kennzeichencode angezeigt werden, der indikativ für das Kennzeichen des Fahrzeugs und/oder ein Kennzeichen des Benutzers des Bordgeräts ist. Beispielsweise stellt die Steuereinheit also sicher, dass die Anzeigeeinheit im initialisierten Zustand des Bordgeräts das amtliche Kennzeichen des Fahrzeugs, in welchem das Bordgerät mitgeführt wird, anzeigt. Erfindungsgemäß ist die Steuereinheit ausgebildet, im initialisierten Zustand des Bordgeräts die Unterlassung der Ausgabe des Initialisierungscodes sicherzustellen.

Bei einer weiteren Ausführungsform umfasst die Kommunikationseinheit ein GSM-Modul oder ein anderes Kommunikationsmodul, das gemäß einem der gängigen Mobilfunkübertragungsstandards, beispielsweise GSM, EDGE, UMTS, GPRS, LTE, 3G, 4G, etc. kompatibel ist. Dementsprechend kann es sich bei dem Mobilfunkkommunikationssystem um eines der gängigen fernreichweitigen Mobilfunkkommunikationssysteme handeln, wie dem GSM-, GPRS-, EDGE-, UMTS-, 3G-, 4G-, LTE- etc. Mobilfunkkommunikationssystem.

Bei dem Mobilfunkkommunikationssystem handelt es sich bevorzugt nicht um ein Nahfeldkommunikationssystem kurzer Reichweite, beispielsweise nicht um eine der folgenden Technologien: NFC, RFID, Bluetooth, WLAN, Infrarot, und dgl.

Das Mobilfunkkommunikationssystem ist bevorzugt ein zelluläres Mobilfunkkommunikationssystem.

Die erfindungsgemäß vorgesehene Anzeigeeinheit umfasst beispielsweise einen kleinen Monitor, um den Initialisierungscode und ggf. den Kennzeichencode anzuzeigen. Zum Zwecke des Anzeigens des Kennzeichencodes und/oder des Initialisierungscode kann gemäß einer Ausführungsform auch auf das bei einem Bordgerät ohnehin bereits vorgesehene Anzeigefeld zugegriffen werden.

Die Steuereinheit ist beispielsweise als Microcontroller ausgebildet. Bei der Steuereinheit muss es sich nicht notwendigerweise um ein einstückiges Modul handeln. Vielmehr kann die Steuereinheit auch mehrere, voneinander beabstandete und verteilte Komponenten aufweisen, die im Bordgerät angeordnet sind und ihre jeweilige Steuerungsfunktion wahrnehmen.

Beispielsweise umfasst der Initialisierungscode wenigstens eines des Folgenden: einen alphanummerischen Code, einen Barcode, einen QR-Code, oder einen sonstigen maschinenlesbaren Code.

Bevorzugt ist der alphanummerische Code auf eine bestimmte Anzahl von alphanummerischen Zeichen beschränkt, beispielsweise auf zwölf Zeichen. Beispielsweise ist die Steuereinheit ausgebildet, die Anzeigeeinheit zu veranlassen, den alphanummerischen Code in Blöcken von jeweils 4 alphanummerischen Zeichen anzuzeigen, also beispielsweise einen Initialisierungscode wie WX3A-BZTU-R3VU oder dergleichen. Einen derartigen Initialisierungscode kann ein Benutzer des Bordgeräts lesen und der zentralen Datenverarbeitungsanlage, ggf. zusammen mit den fahrzeug- und/oder benutzerbezogenen Daten, zuführen, um den Versand der Initialisierungsnachricht an das Bordgerät und damit die Initialisierung des Bordgeräts zu veranlassen.

Der Initialisierungscode kann aber auch einen maschinenlesbaren Code umfassen, wie beispielsweise einen Barcode oder einen QR-Code. Dies hat den Vorteil, dass der Benutzer des Bordgeräts den Initialisierungscode nicht selbst lesen muss und der zentralen Datenverarbeitungsanlage zuführen muss, sondern beispielsweise unter Zuhilfenahme eines mobilen Endgeräts, beispielsweise eines Smartphones, den maschinenlesbaren Code, beispielsweise den Barcode oder den QR-Code, durch das mobile Endgerät lesen lassen kann, wobei das mobile Endgerät beispielsweise ausgebildet ist, ein Programm auszuführen, das eine Verbindung zur zentralen Datenverarbeitungsanlage schaffen kann, so dass das mobile Endgerät den gelesenen Initialisierungscode über das Programm automatisch der zentralen Datenverarbeitungsanlage zuführt.

Beispielsweise kann der maschinenlesbare Code, beispielsweise in Gestalt des besagten QR-Codes oder des Barcodes, auch eine Netzwerkadresse der zentralen Datenverarbeitungsanlage beinhalten, so dass ein mobiles Endgerät, das nicht über ein entsprechendes Programm verfügt, automatisch die gelesene Netzwerkadresse mittels eines Webbrowsers aufrufen kann, und ein Benutzer den Initialisierungscode so manuell eingeben kann oder aber die Eingabe des Initialisierungscodes automatisiert durch das mobile Endgerät erfolgt.

Die zentrale Datenverarbeitungsanlage erstellt in Abhängigkeit von dem eingegebenen Initialisierungscode und optional in Abhängigkeit von den eingegebenen fahrzeug- und/oder benutzerbezogenen Daten die Initialisierungsnachricht mit den Initialisierungsdaten. Das Erzeugen der Initialisierungsnachricht unterbleibt beispielsweise dann, wenn eine zentralseitige Prüfung ergibt, dass das Bordgerät, zu dem der Initialisierungscode gehört, bereits mit anderen fahrzeug- und/ oder benutzerbezogenen Daten verknüpft wurde. Die fahrzeug- und/oder benutzerbezogenen Daten umfassen beispielsweise das amtliche Kennzeichen des Fahrzeugs, in welchem das Bordgerät mitgeführt werden soll. Ferner können die Daten zusätzlich oder alternativ dazu einen Namen, eine Identitätsnummer, eine Benutzerkennung, eine Fahrzeugkennung oder ähnliche Daten, die das Fahrzeug und/oder den Benutzer des Bordgeräts identifizieren, beinhalten. Jedenfalls wird die erzeugte Initialisierungsnachricht über das Mobilfunkkommunikationssystem an das Bordgerät gesendet.

Die Kommunikationseinheit empfängt die Initialisierungsnachricht über das Mobilfunkkommunikationssystem. Daraufhin veranlasst die Steuereinheit die Überführung des Bordgeräts in den initialisierten Zustand durch Initialisieren des Bordgeräts basierend auf den Initialisierungsdaten, die die Initialisierungsnachricht enthält.

Bei einer Ausführungsform des Bordgeräts umfasst das Bordgerät eine Speichereinrichtung, wobei die Steuereinheit ausgebildet ist, ein Speichern der Initialisierungsdaten und/oder von von den Initialisierungsdaten abgeleiteten Daten in der Speichereinrichtung des Bordgeräts zu veranlassen. Das Initialisieren des Bordgeräts durch die Steuereinheit umfasst beispielsweise das Speichern der Initialisierungsdaten und/oder der abgeleiteten Daten in der Speichereinrichtung.

Nach der Initialisierung, also beispielsweise nach der Speicherung der Initialisierungsdaten in der Speichereinrichtung, ist die Ausführung des wenigstens einen der Bordgerätefunktion dienlichen vorbestimmten Prozesses möglich, beispielsweise besagter, für die Mauterkennung zweckmäßiger Versand von Positionsdaten an die zentrale Datenverarbeitungsanlage.

Nachfolgend werden weitere Ausführungsformen des Bordgeräts, der zentralen Datenverarbeitungsanlage und des Verfahrens zum Initialisieren eines Bordgeräts beschrieben. Die zusätzlichen Merkmale dieser weiteren Ausführungsformen können miteinander als auch mit dem bereits oben beschriebenen optionalen Merkmalen zum Ausbilden weiterer Ausführungsbeispiele kombiniert werden, sofern sie nicht ausdrücklich als alternativ zueinander beschrieben sind.

Beispielsweise wendet der optional vorgesehene Codegenerator zum Erzeugen des Initialisierungscodes einen deterministischen Algorithmus an. Beispielsweise umfasst auch die zentrale Datenverarbeitungsanlage einen zentralseitigen Codegenerator, der in gleicher Weise wie der Codegenerator des Bordgeräts den Initialisierungscode erzeugt. Auf diese Weise kann zentralseitig überprüft werden, ob die eingegebenen fahrzeug- und/oder benutzerbezogenen Daten, die bevorzugt mit besagter Seriennummer des Bordgeräts und/oder mit der Seriennummer einer Komponente des Bordgeräts verknüpft sind, auch dem eingegebenen Initialisierungscode zugeordnet sind oder nicht.

Bei einer weiteren Ausführungsform ist die Steuereinheit des Bordgeräts ausgebildet, den Initialisierungscode um wenigstens eine Prüfziffer zu ergänzen. Diese Ergänzung erfolgt bevorzugt auch zentralseitig, so dass die zentrale Datenverarbeitungsanlage erkennen kann, ob eine Eingabe des Initialisierungscodes fehlerhaft erfolgte oder nicht. Des Weiteren kann auf diese Weise eine ungewollte Initialisierung eines anderen Bordgerätes, das sich nicht im Besitz des Benutzers befindet, vermieden werden.

Bei einer weiteren bevorzugten Ausführungsform handelt es sich bei der optional vorgesehenen Speichereinrichtung um ein Sicherheitsmodul.

Das Sicherheitsmodul ist beispielsweise eine "besonders geschützte" eigenständige Einheit, beispielsweise eine Chipkarte. Das Sicherheitsmodul umfasst beispielsweise wenigstens ein autonomes Steuermodul und einen Speicherbereich, wobei das autonome Steuermodul bevorzugt dazu konfiguriert ist, Anfragen nach einer Herausgabe von Daten aus dem Speicherbereich und/oder der Änderung oder Aufnahme von Daten im Speicherbereich nur gegen eine Authentifizierung auszuführen. Die Durchführung der Authentifizierung kann die Analyse einer digitalen Signatur mittels eines vom Signierenden im Sicherheitsmodul abgelegten öffentlichen Schlüssels erfolgen.

Bei einer weiteren Ausführungsform der zentralen Datenverarbeitungsanlage übersendet die zentrale Datenverarbeitungsanlage die Initialisierungsnachricht verschlüsselt. Bevorzugt sind auf dem Bordgerät Mittel installiert, die eine Entschlüsselung der verschlüsselten Initialisierungsnachricht erlauben. Außerdem ist das Bordgerät bevorzugt ausgebildet, den Übergang von dem nicht-initialisierten Zustand in den initialisierten Zustand an die zentrale Datenverarbeitungsanlage zu kommunizieren, beispielsweise im Rahmen einer entsprechenden Bestätigungsnachricht, die über das Mobilfunkkommunikationssystem von dem Bordgerät an die zentrale Datenverarbeitungsanlage gesendet wird.

Bei einer Ausführungsform der zentralen Datenverarbeitungsanlage umfasst die zentrale Datenverarbeitungsanlage eine Datenbank, in der registriert ist, welche der von der zentralen Datenverarbeitungsanlage verwalteten Bordgeräte den nicht-initialisierten Zustand aufweisen und welche der vom System verwalteten Bordgeräte den initialisierten Zustand aufweisen. Somit kann vermieden werden, dass ein Bordgerät mehrmals initialisiert wird.

Bei einer weiteren Ausführungsform ist die zentrale Datenverarbeitungsanlage ausgebildet zum Sicherstellen, dass der Versand der Initialisierungsnachricht an das wenigstens eine Bordgerät nur dann erfolgt, wenn das wenigstens eine Bordgerät den nicht-initialisierten Zustand aufweist.

Bei einer noch weiteren Ausführungsform der zentralen Datenverarbeitungsanlage ist die zentrale Datenverarbeitungsanlage ausgebildet, anhand des über den Empfänger empfangenen Initialisierungscodes eine Mobilfunknummer des wenigstens einen Bordgeräts zu identifizieren und den Versand der Initialisierungsnachricht an die identifizierte Mobilfunknummer zu veranlassen.

Die zentrale Datenverarbeitungsanlage eignet sich insbesondere zum Administrieren des Bordgeräts.

Das Verfahren gemäß dem weiteren Aspekt teilt die Vorteile des oben beschriebenen ersten Aspekts und weist Ausführungsformen auf, die den oben beschriebenen Ausführungsformen des Bordgeräts und der zentralen Datenverarbeitungsanlage entsprechen, insbesondere, wie sie in den abhängigen Ansprüchen definiert sind. Insoweit wird auf das Vorstehende verwiesen.

Einige der der Erfindung zugrunde liegende Gedanken sollen nachfolgend anhand der in den Figuren dargestellten Ausführungsbeispiele näher erläutert werden. Es zeigen:
- Fig. 1: eine schematische und exemplarische Darstellung eines Bordgeräts und eines Systems gemäß einer oder mehreren Ausführungsformen;
- Fig. 2: eine schematische und exemplarische Darstellung eines Bordgeräts und eines Systems gemäß einer oder mehreren Ausführungsformen;
- Fig. 3: eine schematische und exemplarische Darstellung eines Bordgeräts gemäß einer oder mehreren Ausführungsformen.

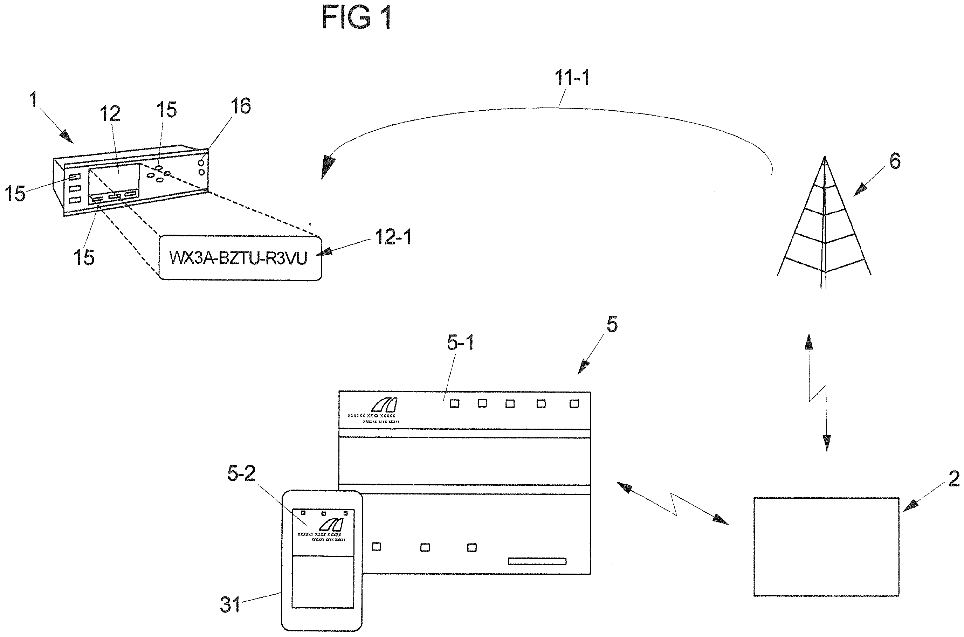

Fig. 1 zeigt schematisch und exemplarisch eine Ausführungsform eines Bordgeräts 1, eine Benutzeroberfläche eines Netzwerkbenutzerportals 5, eine zentrale Datenverarbeitungsanlage 2 zum Administrieren wenigstens eines Bordgeräten sowie ein Mobilfunkkommunikationssystem 6.

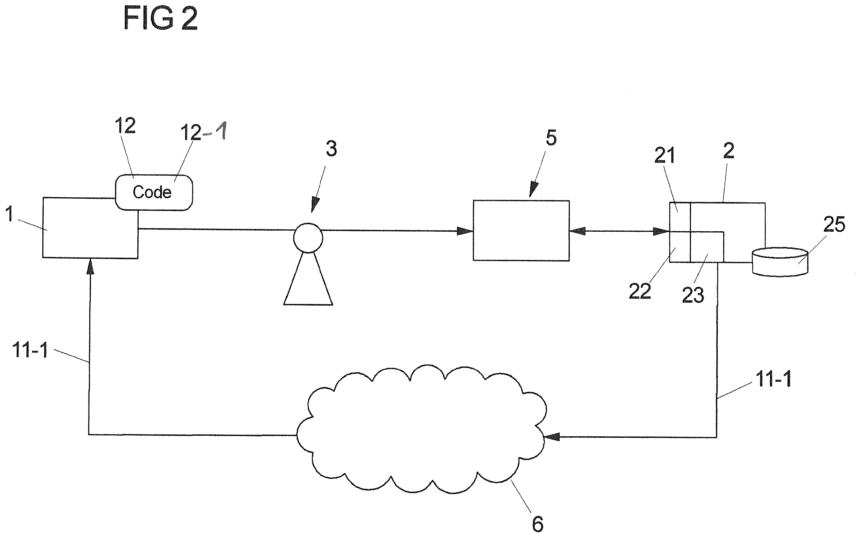

Die Fig. 2 illustriert ebenfalls schematisch und exemplarisch das Bordgerät 1, einen Benutzer 3 des Bordgeräts 1, das Netzwerkbenutzerportal 5, die zentrale Datenverarbeitungsanlage 2 sowie das Mobilfunkkommunikationssystem 6.

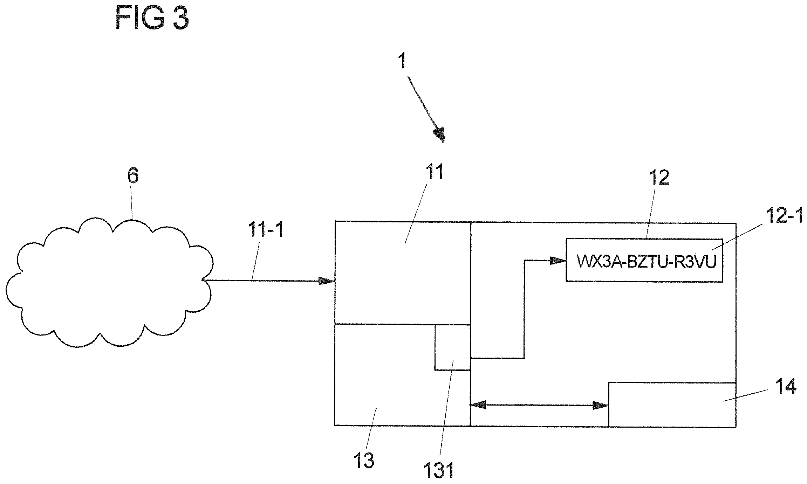

In der Fig. 3 ist ein exemplarischer Aufbau des Bordgeräts 1 schematisch dargestellt. Nachstehend wird auf die Fig. 1 bis Fig. 3 Bezug genommen.

Das Bordgerät 1 ist beispielsweise eine OBU, die zur Mauterkennung dient. Das Bordgerät 1 ist zum Mitführen in einem Fahrzeug, beispielsweise einem LKW oder einem PKW, ausgebildet. An dem Bordgerät sind frontseitig Bedienmittel 15 zum Bedienen des Bordgeräts 1, eine Anzeigeeinheit 12 sowie eine Statusanzeige 16 angeordnet.

Zum drahtlosen Empfangen und Senden von Daten über das Mobilfunkkommunikationssystem 6 umfasst das Bordgerät 1 eine Kommunikationseinheit 11.

Beispielsweise handelt es sich bei dem Mobilfunkkommunikationssystem 6 um das GSM-System und die Kommunikationseinheit 11 umfasst ein entsprechendes GSM-Modul. Es kommen jedoch auch sämtliche anderer Mobilfunkkommunikationsstandards in Betracht, beispielsweise GPRS, UMTS, EDGE, LTE, 3G, 4G, etc.

Eine Steuereinheit 13, die sowohl an die Kommunikationseinheit 11 als auch an die Anzeigeeinheit 12 gekoppelt ist, steuert den Betrieb des Bordgeräts 1.

Das Bordgerät 1 kann sich in einem nicht-initialisierten Zustand befinden oder einem initialisierten Zustand. Im nicht-initialisierten Zustand ist die Ausführung wenigstens eines einer Bordgerätefunktion (beispielsweise die Mauterkennung) dienlichen vorbestimmten Prozesses durch das Bordgerät 1 nicht möglich. Beispielsweise zeigt das Bordgerät 1 mittels der Statusanzeige 16 an, ob die Ausführung des Prozesses durch das Bordgerät 1 möglich ist oder nicht. Beispielsweise signalisiert eine grünleuchtende Lampe der Statusanzeige 16, dass eine die Ausführung möglich ist, und eine rotleuchtende Lampe der Statusanzeige 16, dass die Ausführung nicht möglich ist.

Es kann vorgesehen sein, dass das Bordgerät 1 die Bordgerätefunktion nicht erfüllen kann, sofern besagter Prozess nicht ausgeführt werden kann. Der besagte Prozess kann für die Bordgerätefunktion also nicht nur dienlich sein, sondern auch erforderlich sein.

Das Bordgerät 1 kann beispielsweise eine (nicht dargestellte) Positionsbestimmungseinrichtung umfassen oder für eine Ankopplung an eine Positionsbestimmungseinrichtung ausgebildet sein. Beispielsweise ist die Steuereinheit 1 im initialisierten Zustand des Bordgeräts 1 ausgebildet, die Kommunikationseinheit 11 zu veranlassen, Positionsdaten der Positionsbestimmungseinrichtung und/oder ein Verarbeitungsergebnis der Positionsdaten an die zentrale Datenverarbeitungsanlage 2 zu versenden, und im nicht-initialisierten Zustand des Bordgeräts 1, die Unterlassung eines Versands der Positionsdaten der Positionsbestimmungseinrichtung und die Unterlassung eines Versands eines Verarbeitungsergebnisses der Positionsdaten sicherzustellen. Dieser Versand der Positionsdaten und/oder eines Verarbeitungsergebnisses der Positionsdaten stellt beispielsweise einen für die Bordgerätefunktion des Bordgeräts 1 dienlichen oder erforderlichen Prozess dar.

Die Ausführung des Prozesses durch das Bordgerät 1 erfordert eine vorherige Initialisierung des Bordgeräts 1, also eine Überführung in den initialisierten Zustand, in welchem die Ausführung des Prozesses möglich ist.

Befindet sich das Bordgerät 1 in dem nicht-initialisierten Zustand, so zeigt die Anzeigeeinheit 12 einen Initialisierungscode 12-1 an. Bei dem in der Fig. 1 gezeigten Beispiel handelt es sich bei dem Initialisierungscode um einen zwölfstelligen, alphanumerischen Code (WX3A-BZPO-R3VU). Wie im allgemeinen Teil der Beschreibung erläutert worden ist, kann das Bordgerät 1 auch eine andersartige Ausgabe des Initialisierungscodes 12-1 an den Benutzer 3 veranlassen.

Zum Erzeugen des Initialisierungscodes 12-1 ist bei dem in der Fig. 3 dargestellten Beispiel ein Codegenerator 131 vorgesehen, der den Initialisierungscode 12-1 in Abhängigkeit von einer Seriennummer des Bordgeräts 1 und/oder in Abhängigkeit von einer Seriennummer einer Komponente des Bordgeräts 1 erzeugt. Die Seriennummern sind jeweils unveränderlich. Die Erzeugung des Initialisierungscodes 12-1 erfolgt bevorzugt in deterministischer Weise und nicht etwa zufallsbedingt.

Zeigt das Bordgerät 1 dem Benutzer 3 den Initialisierungscode 12-1 an, so kann der Benutzer 3 diesen Initialisierungscode 12-1 lesen und beispielsweise über das Netzwerkbenutzerportal 5 zusammen mit Benutzer- und/oder fahrzeugbezogenen Daten einem Empfänger 21 der zentralen Datenverarbeitungsanlage 2 zuführen.

In der Fig. 1 ist zum einen eine Ansicht des Netzwerkbenutzerportals 5 bei Zugriff über einen Webbrowser gezeigt (5-1) und zum anderen eine Ansicht (5-2) eines Programms, das auf einem mobilen Endgerät 31 ausgeführt wird.

Zum einen hat der Benutzer 3 also die Möglichkeit, über einen Webbrowser auf das Netzwerkbenutzerportal 5 zuzugreifen und dort manuell den Initialisierungscode 12-1 sowie die Fahrzeug- und/oder benutzerbezogenen Daten einzugeben und so der zentralen Datenverarbeitungsanlage 2 zuzuführen, oder der Benutzer 3 verfügt über ein mobiles Endgerät 31, auf dem ein entsprechendes Programm ausgeführt werden kann, so dass der Initialisierungscode 12-1 und die Benutzer- und/oder fahrzeugbezogenen Daten direkt über das Programm der zentralen Datenverarbeitungsanlage 2 zugeführt werden können.

An dieser Stellte wird bemerkt, dass der Initialisierungscode 12-1 nicht notwendigerweise aus alphanumerischen Zeichen bestehen muss, sondern beispielsweise auch einen maschinenlesbaren Code, wie einem Barcode oder einem QR-Code aufweisen kann. Beispielsweise zeigt also die Anzeigeeinheit 12 des Bordgeräts 1 einen QR-Code an, der mittels des mobilen Endgeräts 31 gelesen werden kann. Beispielsweise öffnet das mobile Endgerät 31 auf das Lesen des von der Anzeigeeinheit 12 angezeigten QR-Codes hin das Programm und veranlasst automatisch das Eingeben des in dem QR-Code enthaltenen Initialisierungscodes in die zentrale Datenverarbeitungsanlage 2.

Gemäß einem anderen Beispiel zeigt die Anzeigeeinheit 12 sowohl einen alphanumerischen Initialisierungscode 12-1 an als auch einen QR-Code, wobei in dem QR-Code beispielsweise eine Netzwerkadresse hinterlegt ist, unter der das Netzwerkbenutzerportal 5 aufgerufen werden kann. So kann der Benutzer 3 beispielsweise das mobile Endgerät dazu verwenden, mittels des angezeigten QR-Codes die Netzwerkadresse des Netzwerkbenutzerportals 5 aufzurufen und dann den angezeigten Initialisierungscode 12-1 mittels eines auf dem mobilen Endgerät 31 ausgeführten Webbrowsers einzugeben.

Die zentrale Datenverarbeitungsanlage 2 steht in Wirkverbindung mit dem Netzwerkbenutzerportal 5. Die zentrale Datenverarbeitungsanlage 2 umfasst beispielsweise den in der Fig. 2 schematisch illustrierten Empfänger 21, der zum Empfangen des dem Bordgerät 1 zugeordneten Initialisierungscodes 12-1 ausgebildet ist. Wie oben erläutert worden ist, kann dieser Empfang über das Netzwerkbenutzerportal 5 erfolgen. Beispielsweise umfasst der Empfänger 21 also eine (nicht dargestellte) Portaleinrichtung, die zum Bereitstellen und zum Betreiben des Netzwerkbenutzerportals 5 ausgebildet ist.

Das Netzwerkbenutzerportal 5 ist bevorzugt über das Internet zugänglich.

Für das Zuführen des Initialisierungscodes 12-1 und/oder der fahrzeug- und/oder benutzerbezogenen Daten ist das Vorhandensein des Netzwerkbenutzerportals 5 jedoch nicht unbedingt erforderlich. Wesentlich ist vielmehr, dass der Benutzer 3 die Zuführung des Initialisierungscodes 12-1 und/oder der fahrzeug- und/oder benutzerbezogenen Daten zur zentralen Datenverarbeitungsanlage veranlasst. Dies kann beispielsweise mittels des Netzwerkbenutzerportals 5 erfolgen, beispielsweise direkt über das auf dem mobilen Endgerät 31 ausgeführte Programm oder auf anderem Wege.

Ferner umfasst das die zentrale Datenverarbeitungsanlage 2 beispielsweise einen Server 22, der in Wirkverbindung mit dem Empfänger 21 steht. Der Server ist ausgebildet, die über den Empfänger 21 empfangenen Daten, also insbesondere den eingegebenen Initialisierungscode 12-1 und die eingegebenen fahrzeug- und/oder benutzerbezogenen Daten auf Validität zu prüfen. Insbesondere prüft der Server 22, ob der eingegebene Initialisierungscode 12-1 tatsächlich dem Benutzer 3 bzw. dem Fahrzeug, in welchem das Bordgerät 1 mitgeführt werden soll, zugeordnet ist. Verläuft die Validitätsprüfung erfolgreich, so erstellt der Server 22 in Abhängigkeit von den eingegebenen Daten eine Initialisierungsnachricht 11-1. Die Initialisierungsnachricht 11-1 enthält Initialisierungsdaten, die für die Initialisierung des Bordgeräts 1 erforderlich sind.

Die zentrale Datenverarbeitungsanlage 2 umfasst auch eine Übertragungseinrichtung 23, wobei die zentrale Datenverarbeitungsanlage 2 ausgebildet ist, die Übertragungseinrichtung 23 zu veranlassen, die die Initialisierungsdaten beinhaltende Initialisierungsnachricht 11-1 über das Mobilfunkkommunikationssystem 6 an das Bordgerät 1 zu versenden.

Die Steuereinheit 13 ist ausgebildet zum Überführen des Bordgeräts 1 in den initialisierten Zustand durch Initialisieren des Bordgeräts 1 in Abhängigkeit von den Initialisierungsdaten, die in der von der Kommunikationseinheit 11 empfangenen Initialisierungsnachricht 11-1 der vom Bordgerät 1 beabstandeten zentralen Datenverarbeitungsanlage 2 enthalten sind. Im Rahmen der Initialisierung werden die Initialisierungsdaten und oder von den Initialisierungsdaten abgeleitete Daten beispielsweise in einer Speichereinrichtung 14 des Bordgeräts 1 gespeichert.

Mit anderen Worten können das Bordgerät 1 und das System 2 wie folgt beschrieben werden:
Das im nicht-initialisierten Zustand befindliche Bordgerät 1 zeigt mittels der Anzeigeeinheit 12 den Initialisierungscode 12-1 an. Zusätzlich signalisiert das Bordgerät 1 mittels einer rot leuchtenden Lampe der Statusanzeige 16 diesen nicht-initialisierten Zustand. Das Anzeigen des Initialisierungscodes 12-1 mittels der Anzeigeeinheit 12 erfordert also eine energietechnische Versorgung des Bordgerätes 1. Der angezeigte Initialisierungscode 12-1 wird zuvor von dem Codegenerator 131 der Steuereinheit 13 erzeugt, beispielsweise in Abhängigkeit von einer internen, unveränderbaren Seriennummer des Bordgeräts 1, beispielsweise die Hardware-Seriennummer und/oder eine Identifikationsnummer der Speichereinrichtung 14 oder Ähnliches. Beispielsweise wird der Initialisierungscode 12-1 mit einer Prüfziffer ergänzt, so dass fehlerhafte Eingaben in das Netzwerkbenutzerportal 5 erkannt werden können und/oder Überschneidungen mit Initialisierungscodes anderer Bordgeräte vermieden werden können. Dabei ist es ferner zweckmäßig, dass der Initialisierungscode 12-1 in einer Zeile dargestellt werden kann und beispielsweise lediglich zwölf Zeichen enthält. Um eine einfache Lesbarkeit des Initialisierungscodes 12-1 zur ermöglichen, ist es zweckmäßig, die einzelnen Zeichen in drei Gruppen von jeweils vier Zeichen aufzuteilen und die drei Gruppen durch Bindestriche miteinander zu verbinden.

Nach dem Einbau des Bordgeräts 1 in das Fahrzeug, insbesondere nach Sicherstellung der Stromversorgung, zeigt das Bordgerät 1 also den Initialisierungscode 12-1 an, sofern es sich in dem nicht-initialisierten Zustand befindet. Sollte sich das Bordgerät 1 bereits im initialisierten Zustand befinden, so zeigt das Bordgerät 1 mittels der Anzeigeeinheit 12 beispielsweise einen (in den Fig. 1 bis Fig. 3 nicht gezeigten) Kennzeichencode an, der beispielsweise indikativ für das amtliche Kennzeichen des Fahrzeugs ist.

Über das Netzwerkbenutzerportal 5, das beispielsweise über einen Web-Browser (Bezugsziffer 5-1) zugänglich ist, und/oder über ein auf dem mobilen Endgerät 31 ausgeführtes Programm (Bezugsziffer 5-2), kann der bereits registrierte Benutzer 3 sowohl die fahrzeug- und/oder benutzerbezogenen Daten als auch den angezeigten Initialisierungscode 12-1 der zentralen Datenverarbeitungsanlage 2 zuführen. Die Eingabe der Daten über das Netzwerkbenutzerportal 5 kann voraussetzen, dass sich der Benutzer 3 zuvor bei dem Netzwerkbenutzerportal 5 als Benutzer registriert hat. Damit kann sichergestellt werden, dass nur ein beim Benutzerportal 5 registrierter Nutzer besagte Daten eingeben kann, und zum anderen kann zentralseitig überprüft werden, ob die eingegebenen Daten dem registrierten Benutzer zugeordnet sind oder nicht. Gleiches gilt sinngemäß für das Programm, das auf dem mobilen Endgerät 31 ausgeführt wird.

Beispielsweise ermöglicht das Netzwerkbenutzerportal 5 oder das Programm es dem Benutzer 3, mehrere Fahrzeuge für die Mauterhebung anzumelden. Hat der Benutzer 3 beispielsweise bereits mehrere Fahrzeuge angemeldet, so kann bei dem Netzwerkbenutzerportal 5 oder dem Programm vorgesehen sein, dass der Benutzer 3 für Fahrzeuge, denen bislang noch keine Bordgeräte zugeordnet sind, eine Liste der angemeldeten Fahrzeuge angezeigt wird und dem Benutzer 3 so die Möglichkeit gegeben wird, das betreffende Fahrzeug auszuwählen, in welchem das Bordgerät 1 mitgeführt werden soll. Es ist aber auch möglich, dass der Benutzer 3 ein neues Fahrzeug mit den relevanten Daten anmeldet. Nach Auswahl des Fahrzeugs, in welchem das Bordgerät 1 mitgeführt werden soll, gibt der Benutzer 3 den Initialisierungscode 12-1 über das Netzwerkbenutzerportal 5 ein. Alternativ ist es möglich, dass der Benutzer 3 das mobile Endgerät bemüht, um entweder mittels des mobilen Endgeräts 31 den Initialisierungscode 12-1 manuell einzugeben, oder aber der Initialisierungscode 12-1 wird derart von der Anzeigeeinheit 12 des Bordgeräts 1 angezeigt, dass das mobile Endgerät 31 diesen angezeigten Initialisierungscode 12-1 automatisch lesen kann und optional automatisch an die zentrale Datenverarbeitungsanlage 2 übermittelt. Diese Variante ist bereits weiter oben etwas detaillierter beschrieben worden. Nach Eingabe der benutzer- und/oder fahrzeugbezogenen Daten und nach Eingabe des Initialisierungscodes 12-1 kann das Netzwerkbenutzerportal 5 bzw. das Programm dem Benutzer 3 eine Übersicht der eingegebenen Daten anzeigen und zur Bestätigung der Richtigkeit der angezeigten Daten auffordern.

Die eingegebenen und/oder automatisch gelesenen Daten werden der zentralen Datenverarbeitungsanlage 2 über den Empfänger 21 zugeführt. Sodann überprüft die zentrale Datenverarbeitungsanlage 2 die Validität der empfangenen Daten. Insbesondere überprüft der der Server 22 mittels einer Datenbank 25, ob das Bordgerät 1, welches dem eingegebenen Initialisierungscode zugeordnet ist, nicht schon im initialisierten Zustand ist. In diesem Fall würde die zentrale Datenverarbeitungsanlage 2 keine Initialisierungsnachricht 11-1 an das Bordgerät 1 versenden. Wird jedoch die Validität der eingegebenen Daten bestätigt und befindet sich das Bordgerät 1 tatsächlich im nicht-initialisierten Zustand, so veranlasst die zentrale Datenverarbeitungsanlage 2 die Erzeugung und den Versand der Initialisierungsnachricht 11-1, die die erforderlichen Initialisierungsdaten enthält. Außerdem stellt die zentrale Datenverarbeitungsanlage 2 sicher, dass das Bordgerät 1 nicht mit weiteren Fahrzeugen verknüpft werden kann.

Der Versand der Initialisierungsnachricht 11-1 kann beispielsweise verschlüsselt erfolgen, um die Sicherheit zu erhöhen. Damit das Bordgerät 1 die Initialisierungsnachricht 11-1 mittels der Kommunikationseinheit 11 empfangen kann, muss eine Stromversorgung des Bordgeräts 1 sichergestellt sein. Nach dem Empfang der Initialisierungsnachricht 11-1 verarbeitet das Bordgerät 1 die darin enthaltenen Initialisierungsdaten. Beispielsweise veranlasst die Steuereinheit 13 das Speichern der Initialisierungsdaten und/oder von den Initialisierungsdaten abgeleiteten Daten in der Speichereinrichtung 14. Wird dieser Vorgang erfolgreich durchgeführt, so bestätigt das Bordgerät 1 die Initialisierung optional mittels einer Bestätigungsnachricht an das System 2. Diese Bestätigungsnachricht kann ebenfalls mittels der Kommunikationseinheit 11 über das Mobilfunkkommunikationssystem 6 an das System 2 versendet werden.

Nach erfolgter Initialisierung, also nach Überführung des Bordgeräts 1 in den initialisierten Zustand, zeigt die Anzeigeeinheit 12 nicht mehr den Initialisierungscode 12-1 an, sondern besagten Kennzeichencode, beispielsweise das amtliche Kennzeichen des Fahrzeugs. Außerdem leuchtet bei der Statusanzeige 16 nicht mehr die rote Lampe auf, sondern die grüne, sofern auch die übrigen Voraussetzungen erfüllt sind, die für die Ausführung des der Bordgerätefunktion dienlichen Prozesses erforderlich sind. Dem Benutzer 3 wird so mitgeteilt, dass das Bordgerät 1 funktionsbereit ist.

Sollte eine Softwareaktualisierung oder eine Aktualisierung von anderen Betriebsdaten bei dem Bordgerät 1 notwendig sein, so führt das Bordgerät 1 derartige Aktualisierungen unabhängig von dem aktuellen Zustand (initialisiert vs. nicht-initialisiert) mit der zentralen Datenverarbeitungsanlage 2 durch. Das Bordgerät 1 kann also auch dann eine Aktualisierung der Betriebssoftware oder anderer Betriebsdaten vornehmen, wenn es sich im nicht-initialisierten Zustand befindet. Eine derartige Aktualisierung der Betriebssoftware und/oder der Betriebsdaten kann auch bedeuten, dass der Codegenerator 131 nach der Aktualisierung einen neuen Initialisierungscode erzeugen muss.

Das Netzwerkbenutzerportal 5 und/oder das auf dem mobilen Endgeräte 31 ausführbare Programm sind/ist beispielsweise derart ausgestaltet, dass der Benutzer 3 jederzeit die für eines seiner Fahrzeuge hinterlegten Daten einsehen und ggf. auch ändern kann. Eine derartige Datenänderung kann beispielsweise notwendig sein, wenn das betreffende Fahrzeug ein neues amtliches Kennzeichen erhält. Nach Erhalt eines neuen Kennzeichens kann eine erneute Initialisierung des Bordgerätes 1 erforderlich sein.

In ähnlicher Weise wie oben die Initialisierung des Bordgeräts 1 beschrieben worden ist, kann auch eine Um-Initialisierung erfolgen, beispielsweise im Rahmen einer Fahrzeugummeldung, bei der das Bordgerät 1 einem anderen Fahrzeug zugeordnet wird. Dazu kann das Bordgerät 1 durch den Benutzer mittels der Auswahl eines Menüpunktes einer Bordgerät-Applikation, die durch die Steuereinheit 13 des Bordgerätes 1 ausgeführt wird, aus dem initialisierten Zustand vorübergehend in den nicht-initialisierten Zustand versetzt werden, in dem das Bordgerät 1 einen neuen Initialisierungscode an den Benutzer 3 ausgibt.

Dieser neue Initialisierungscode, der sich von dem Initialisierungscode 12-1 des vorhergehenden Initialisierungsprozesses unterscheiden kann, wird dann in Analogie zu dem oben beschriebenen Verfahren von dem Endgerät 31 empfangen und - vorzugsweise ergänzt um die fahrzeugbezogenen Daten des anderen Fahrzeugs - von dem Endgerät 31 an die zentrale Datenverarbeitungsanlage 2 zur Bildung von dem anderen Fahrzeug entsprechenden Initialisierungsdaten übermittelt.

Für eine De-Initialisierung, beispielsweise eine Fahrzeugabmeldung, kann das Netzwerkbenutzerportal 5 und/oder das auf dem mobilen Endgerät 31 ausführbare Programm beispielsweise derart ausgestaltet sein, dass dem Benutzer 3 die Möglichkeit gegeben wird, ein bestimmtes seiner Fahrzeuge abzumelden. Erfolgt eine derartige Abmeldung durch den Benutzer 3, beispielsweise durch Eingabe der entsprechenden benutzer- und/ oder fahrzeugbezogenen Daten in das dem Benutzer 3 zur Verfügung stehende Endgerät 31 und durch Übermittlung der eingegebenen benutzer- und/oder fahrzeugbezogenen Daten von dem mobilen Endgerät 31 an die zentrale Datenverarbeitungsanlage 2, so versendet die zentrale Datenverarbeitungsanlage 2 eine (in den Fig. 1-3 nicht dargestellte) De-Initialisierungsnachricht an das Bordgerät 1. Die De-Initialisierungsnachricht enthält "leere" Initialisierungsdaten, also Initialisierungsdaten, die bestimmte Standard-Werte aufweisen und dazu führen, dass das Bordgerät 1 infolge der Verarbeitung der De-Initialisierungsnachricht in den nicht-initialisierten Zustand übergeht, beispielsweise indem die Steuereinheit 13 die Löschung der zuvor in der Speichereinrichtung 14 hinterlegten Initialisierungsdaten (und/ oder aus diesen abgeleitete Daten) veranlasst.

Der Übergang in den nicht-initialisierten Zustand führt insbesondere auch dazu, dass das Bordgerät 1 beim Einschalten nicht den Kennzeichencode anzeigt, sondern den Initialisierungscode 12-1, so dass dem Benutzer 3 signalisiert wird, dass das Bordgerät 1 momentan den der Bordgerätefunktion dienlichen Prozess nicht ausführen kann. Außerdem führt der Versand der De-Initialisierungsnachricht dazu, dass die zentrale Datenverarbeitungsanlage 2auf der Datenbank 25 vermerkt, dass das Bordgerät 1 nunmehr im nicht-initialisierten Zustand ist und folglich eine Initialisierungsnachricht 11-1 erhalten darf.

### Bezugszeichenliste

- 1: Bordgerät

- 11: Kommunikationseinheit
- 11-1: Initialisierungsnachricht

- 12: Anzeigeeinheit
- 12-1: Initialisierungscode

- 13: Steuereinheit
- 131: Codegenerator

- 14: Speichereinrichtung
- 15: Bedienmittel
- 16: Statusanzeige

- 2: Zentrale Datenverarbeitungsanlage
- 21: Empfänger
- 22: Server
- 23: Übertragungseinrichtung
- 25: Datenbank

- 3: Benutzer
- 31: Mobiles Endgerät

- 5: Netzwerkbenutzerportal
- 5-1: Ansicht des Netzwerkbenutzerportals bei Zugriff über Webbrowser
- 5-2: Auf einem mobilen Endgerät ausgeführtes Programm

- 6: Mobilfunkkommunikationssystem

## Patentansprüche

1. System umfassend
- ein Bordgerät (1), das zum Mitführen in einem Fahrzeug ausgebildet ist und einen nicht-initialisierten Zustand, in welchem die Ausführung wenigstens eines einer Bordgerätefunktion dienlichen vorbestimmten Prozesses durch das Bordgerät (1) nicht möglich ist, sowie einen initialisierten Zustand, bei welchem die Ausführung des vorbestimmten Prozesses durch das Bordgerät (1) möglich ist, aufweisen kann,
- eine vom Bordgerät (1) beabstandete zentrale Datenverarbeitungsanlage (2), und
- ein einem Benutzer (3) des Bordgeräts zur Verfügung stehendes und vom Bordgerät (1) beabstandetes Endgerät (31);
wobei das Bordgerät (1) umfasst:
- eine Kommunikationseinheit (11), die ausgebildet ist zum drahtlosen Empfangen und Senden von Daten über ein Mobilfunkkommunikationssystem (6);
- eine an die Kommunikationseinheit (11) gekoppelte Steuereinheit (13) zum Steuern des Betriebs des Bordgeräts (1);
**dadurch gekennzeichnet, dass**
- die Steuereinheit (13) im nicht-initialisierten Zustand des Bordgerätes (1) ausgebildet ist zum Veranlassen einer Ausgabe eines dem Bordgerät (1) zugeordneten und durch das Bordgerät (1) bereitgestellten Initialisierungscodes (12-1)
∘ an den Benutzer (3) mittels einer an die Steuereinheit (13) gekoppelten Anzeigeeinheit (12), wobei die Steuereinheit (13) ausgebildet ist, die Anzeigeeinheit (12) zu veranlassen, den Initialisierungscode (12-1) anzuzeigen ;
- die zentrale Datenverarbeitungsanlage (2) ausgebildet ist zum
∘ Empfangen des Initialisierungscodes (12-1) von dem Endgerät (31),
∘ Bereitstellen von Initialisierungsdaten in Abhängigkeit von dem empfangenen Initialisierungscode (12-1), und
∘ Versenden einer die Initialisierungsdaten beinhaltenden Initialisierungsnachricht (11-1) über das Mobilfunkkommunikationssystem (6) an das Bordgerät (1); und
- die Steuereinheit (13) im nicht-initialisierten Zustand des Bordgerätes (1) ausgebildet ist zum Überführen des Bordgeräts (1) in den initialisierten Zustand durch Initialisieren des Bordgeräts (1) in Abhängigkeit von den Initialisierungsdaten, die in der von der Kommunikationseinheit (11) empfangenen Initialisierungsnachricht (11-1) der zentralen Datenverarbeitungsanlage (2) enthalten sind; und
- die Steuereinheit (13) ausgebildet ist, im initialisierten Zustand des Bordgeräts (1) die Unterlassung der Ausgabe des Initialisierungscodes (12-1) sicherzustellen.

2. System nach Anspruch 1, **dadurch gekennzeichnet, dass** die Steuereinheit (13) ausgebildet ist, die Anzeigeeinheit (12) zu veranlassen, in Abhängigkeit von dem Zustand des Bordgeräts (1) wahlweise den Initialisierungscode (12-1) oder einen Kennzeichencode anzuzeigen, wobei der Kennzeichencode indikativ ist für ein Kennzeichen des Fahrzeugs und/oder ein Kennzeichen eines Benutzers (3) des Bordgeräts (1).

3. System nach einem der vorstehenden Ansprüche, **dadurch gekennzeichnet, dass** die Steuereinheit (13) einen Codegenerator (131) umfasst, der ausgebildet ist zum Erzeugen des Initialisierungscodes (12-1) in Abhängigkeit von einer auf dem Bordgerät (1) hinterlegten unveränderbaren Seriennummer des Bordgeräts (1) und/oder von einer unveränderbaren Seriennummer einer Komponente des Bordgeräts (1).

4. System nach einem der vorstehenden Ansprüche, **dadurch gekennzeichnet, dass** der Initialisierungscode (12-1) wenigstens eines des Folgenden beinhaltet:
- einen alphanumerischen Code;
- einen Barcode;
- einen QR-Code;
- einen maschinenlesbaren Code.

5. System nach einem der vorstehenden Ansprüche, **dadurch gekennzeichnet, dass** die Steuereinheit (13) ausgebildet ist zum Verknüpfen des Initialisierungscodes (12-1) mit wenigstens eines des Folgenden:
- eine Prüfziffer;
- eine Rufnummer einer zentralen Datenverarbeitungsanlage (2);
- eine Netzwerkadresse (z. B. URL) eines Netzwerkbenutzerportals (5), welches die Eingabe des Initialisierungscodes (12-1) erlaubt.

6. System nach einem der vorstehenden Ansprüche, **dadurch gekennzeichnet, dass** das Bordgerät (1) eine Speichereinrichtung (14) aufweist, wobei die Steuereinheit (13) ausgebildet ist, ein Speichern der Initialisierungsdaten und/oder von von den Initialisierungsdaten abgeleiteten Daten in der Speichereinrichtung (14) des Bordgeräts (1) zu veranlassen.

7. System nach Anspruch 6, **dadurch gekennzeichnet, dass** das Initialisieren des Bordgeräts (1) durch die Steuereinheit (13) das Speichern der Initialisierungsdaten und/oder der abgeleiteten Daten in der Speichereinrichtung (14) umfasst.

8. System nach Anspruch 6 oder 7, **dadurch gekennzeichnet, dass** die Steuereinheit (13) ausgebildet ist, den Zustand des Bordgeräts (1) zu detektieren durch Abfrage von den Zustand des Bordgeräts (1) repräsentierenden Daten in der Speichereinrichtung (14).

9. System (1) nach einem der vorstehenden Ansprüche, **dadurch gekennzeichnet, dass** das Bordgerät (1) eine Positionsbestimmungseinrichtung umfasst oder für eine Ankopplung an eine Positionsbestimmungseinrichtung ausgebildet ist, wobei
- die Steuereinheit (1) im initialisierten Zustand des Bordgeräts (1) ausgebildet ist, die Kommunikationseinheit (11) zu veranlassen, Positionsdaten der Positionsbestimmungseinrichtung und/oder ein Verarbeitungsergebnis der Positionsdaten an die zentrale Datenverarbeitungsanlage (2) zu versenden;
- die Steuereinheit (1) im nicht-initialisierten Zustand des Bordgeräts (1) ausgebildet ist, die Unterlassung eines Versands der Positionsdaten der Positionsbestimmungseinrichtung und die Unterlassung eines Versands eines Verarbeitungsergebnisses der Positionsdaten sicherzustellen.

10. Verfahren zum Initialisieren eines Bordgeräts (1) in einem System mit wenigstens einer zentralen Datenverarbeitungsanlage (2) und wenigstens einem einem Benutzer (3) des Bordgerätes (1) zur Verfügung stehenden, vom Bordgerät (1) beabstandeten Endgerät (31), wobei das Bordgerät (1) zum Mitführen in einem Fahrzeug ausgebildet ist und einen nicht-initialisierten Zustand, in welchem die Ausführung wenigstens eines einer Bordgerätefunktion dienlichen vorbestimmten Prozesses durch das Bordgerät (1) nicht möglich ist, sowie einen initialisierten Zustand, bei welchem die Ausführung des vorbestimmten Prozesses durch das Bordgerät (1) möglich ist, aufweisen kann, und wobei das Bordgerät (1) umfasst:
- eine Kommunikationseinheit (11), die ausgebildet ist zum drahtlosen Empfangen und Senden von Daten über ein Mobilfunkkommunikationssystem (6);
- eine an die Kommunikationseinheit (11) gekoppelte Steuereinheit (13) zum Steuern des Betriebs des Bordgeräts (1);
**dadurch gekennzeichnet, dass** das Verfahren die folgenden Schritte aufweist:
- mittels der Steuereinheit (13): Veranlassen, im nicht-initialisierten Zustand des Bordgeräts (1), einer Ausgabe eines dem Bordgerät (1) zugeordneten Initialisierungscodes (12-1) an
∘ den Benutzer (3), mittels einer an die Steuereinheit (13) gekoppelte Anzeigeeinheit (12), indem die Anzeigeeinheit (12) den Initialisierungscode (12-1) anzeigt;
- Eingabe des Initialisierungscodes (12-1) in das Endgerät (31);
- in der zentralen Datenverarbeitungsanlage (2): Empfangen des Initialisierungscodes (12-1) von dem Endgerät (31), Bereitstellen von Initialisierungsdaten in Abhängigkeit von dem empfangenen Initialisierungscode (12-1) und Versenden einer die Initialisierungsdaten beinhaltenden Initialisierungsnachricht (11-1) über das Mobilfunkkommunikationssystem (6) an das Bordgerät (1);
- mittels der Steuereinheit (13): Überführen des Bordgeräts (1) in den initialisierten Zustand durch Initialisieren des Bordgeräts (1) in Abhängigkeit von den Initialisierungsdaten, die in der von der Kommunikationseinheit (11) empfangenen Initialisierungsnachricht (11-1) der zentralen Datenverarbeitungsanlage (2) enthalten sind;
- mittels der Steuereinheit: Sicherstellen, im initialisierten Zustand des Bordgeräts (1), der Unterlassung der Ausgabe des Initialisierungscodes (12-1).

11. Verfahren nach Anspruch 10, **dadurch gekennzeichnet, dass**
- in der zentralen Datenverarbeitungsanlage (2) zusätzlich zu dem Initialisierungscode (12-1) auch benutzer- und/oder fahrzeugbezogene Daten von dem Endgerät (13) empfangen werden und die Initialisierungsdaten zumindest teilweise die empfangenen benutzer- und/oder fahrzeugbezogene Daten umfassen.

## Claims

1. System comprising
- an on-board device (1), which is designed for being taken along in a vehicle and can have a non-initialized state, in which it is not possible for the on-board device (1) to carry out at least one predetermined process which is useful for an on-board device function, and also an initialized state, in which it is possible for the on-board device (1) to carry out the predetermined process,
- a central data processing system (2) at a distance from the on-board device (1), and
- a terminal (31) at a distance from the on-board device (1) and available to a user (3) of the on-board device;
the on-board device (1) comprising:
- a communication unit (11) designed for wirelessly receiving and transmitting data via a mobile radio communication system (6);
- a control unit (13) coupled to the communication unit (11) for controlling the operation of the on-board device (1) ;
**characterized in that**
- in the non-initialized state of the on-board device (1), the control unit (13) is designed for causing an output of an initialization code (12-1) assigned to the on-board device (1) and provided by the on-board device (1)
∘ to the user (3) by means of a display unit (12) coupled to the control unit (13), the control unit (13) being designed to cause the display unit (12) to display the initialization code (12-1);
- the central data processing system (2) is designed for
∘ receiving the initialization code (12-1) from the terminal (31),
∘ providing initialization data depending on the received initialization code (12-1), and
∘ sending an initialization message (11-1) including the initialization data via the mobile radio communication system (6) to the on-board device (1); and
- in the non-initialized state of the on-board device (1), the control unit (13) is designed for transferring the on-board device (1) to the initialized state by initializing the on-board device (1) depending on the initialization data contained in the initialization message (11-1) from the central data processing system (2) that is received by the communication unit (11); and
- the control unit (13) is designed to ensure that the output of the initialization code (12-1) is omitted in the initialized state of the on-board device (1).

2. System according to Claim 1, **characterized in that** the control unit (13) is designed to cause the display unit (12) to display either the initialization code (12-1) or an identification code depending on the state of the on-board device (1), the identification code being indicative of an identification of the vehicle and/or an identification of a user (3) of the on-board device (1).

3. System according to either of the preceding claims, **characterized in that** the control unit (13) comprises a code generator (131) designed for generating the initialization code (12-1) depending on an unchangeable serial number of the on-board device (1) stored on the on-board device (1) and/or depending on an unchangeable serial number of a component of the on-board device (1).

4. System according to any of the preceding claims, **characterized in that** the initialization code (12-1) includes at least one of the following:
- an alphanumeric code;
- a barcode;
- a QR code;
- a machine-readable code.

5. System according to any of the preceding claims, **characterized in that** the control unit (13) is designed for linking the initialization code (12-1) with at least one of the following:
- a check digit;
- a call number of a central data processing system (2);
- a network address (e.g. URL) of a network user portal (5) that allows the input of the initialization code (12-1) .

6. System according to any of the preceding claims, **characterized in that** the on-board device (1) has a storage device (14), the control unit (13) being designed to cause the initialization data and/or data derived from the initialization data to be stored in the storage device (14) of the on-board device (1).

7. System according to Claim 6, **characterized in that** the initializing of the on-board device (1) by the control unit (13) comprises storing the initialization data and/or the derived data in the storage device (14).

8. System according to Claim 6 or 7, **characterized in that** the control unit (13) is designed to detect the state of the on-board device (1) by retrieving data representing the state of the on-board device (1) in the storage device (14).

9. System (1) according to any of the preceding claims, **characterized in that** the on-board device (1) comprises a position determining device or is designed for coupling to a position determining device, in which case
- in the initialized state of the on-board device (1), the control unit (1) is designed to cause the communication unit (11) to send position data of the position determining device and/or a processing result of the position data to the central data processing system (2);
- in the non-initialized state of the on-board device (1), the control unit (1) is designed to ensure that sending the position data of the position determining device is omitted and that sending a processing result of the position data is omitted.

10. Method for initializing an on-board device (1) in a system comprising at least one central data processing system (2) and at least one terminal (31) at a distance from the on-board device (1) and available to a user (3) of the on-board device (1), wherein the on-board device (1) is designed for being taken along in a vehicle and can have a non-initialized state, in which it is not possible for the on-board device (1) to carry out at least one predetermined process which is useful for an on-board device function, and also an initialized state, in which it is possible for the on-board device (1) to carry out the predetermined process, and wherein the on-board device (1) comprises:
- a communication unit (11) designed for wirelessly receiving and transmitting data via a mobile radio communication system (6);
- a control unit (13) coupled to the communication unit (11) for controlling the operation of the on-board device (1) ;
**characterized in that** the method has the following steps:
- by means of the control unit (13): causing, in the non-initialized state of the on-board device (1), an output of an initialization code (12-1) assigned to the on-board device (1) to
∘ the user (3), by means of a display unit (12) coupled to the control unit (13), by virtue of the display unit (12) displaying the initialization code (12-1);
- input of the initialization code (12-1) into the terminal (31);
- in the central data processing system (2): receiving the initialization code (12-1) from the terminal (31), providing initialization data depending on the received initialization code (12-1) and sending an initialization message (11-1) including the initialization data via the mobile radio communication system (6) to the on-board device (1);
- by means of the control unit (13): transferring the on-board device (1) to the initialized state by initializing the on-board device (1) depending on the initialization data contained in the initialization message (11-1) from the central data processing system (2) that is received by the communication unit (11);
- by means of the control unit: ensuring, in the initialized state of the on-board device (1), that the output of the initialization code (12-1) is omitted.

11. Method according to Claim 10, **characterized in that**
- in the central data processing system (2), in addition to the initialization code (12-1), user- and/or vehicle-related data are also received from the terminal (13) and the initialization data at least partially comprise the received user- and/or vehicle-related data.

## Revendications

1. Système, comprenant
- un appareil embarqué (1), lequel est configuré pour être emporté dans un véhicule et qui peut présenter un état non initialisé, dans lequel l'exécution par l'appareil embarqué (1) d'au moins un processus prédéterminé servant à une fonction de l'appareil embarqué n'est pas possible, ainsi qu'un état initialisé, avec lequel l'exécution par l'appareil embarqué (1) du processus prédéterminé est possible,
- une installation de traitement de données centrale (2) espacée de l'appareil embarqué (1), et
- un terminal (31) à la disposition d'un utilisateur (3) de l'appareil embarqué et espacé de l'appareil embarqué (1) ;
l'appareil embarqué (1) comprenant :
- une unité de communication (11) qui est configurée pour recevoir et émettre sans fil des données par le biais d'un système de radiocommunication mobile (6) ;
- une unité de commande (13) couplée à l'unité de communication (11) pour commander le fonctionnement de l'appareil embarqué (1) ;
**caractérisé en ce que**
- l'unité de commande (13) est configurée pour, dans l'état non initialisé de l'appareil embarqué (1), provoquer une délivrance d'un code d'initialisation (12-1) associé à l'appareil embarqué (1) et mis à disposition par l'appareil embarqué (1)
∘ à l'utilisateur (3) au moyen d'une unité d'affichage (12) couplée à l'unité de commande (13), l'unité de commande (13) étant configurée pour amener l'unité d'affichage (12) à afficher le code d'initialisation (12-1) ;
- l'installation de traitement de données centrale (2) est configurée pour
∘ recevoir le code d'initialisation (12-1) de la part du terminal (31),
∘ fournir des données d'initialisation en fonction du code d'initialisation reçu (12-1), et
∘ envoyer un message d'initialisation (11-1) contenant les données d'initialisation à l'appareil embarqué (1) par le biais du système de radiocommunication mobile (6) ; et
- l'unité de commande (13) est configurée pour, dans l'état non initialisé de l'appareil embarqué (1), faire passer l'appareil embarqué (1) à l'état initialisé par initialisation de l'appareil embarqué (1) en fonction des données d'initialisation qui sont contenues dans le message d'initialisation (11-1) de l'installation de traitement de données centrale (2) reçu par l'unité de communication (11) ; et
- l'unité de commande (13) est configurée pour, dans l'état initialisé de l'appareil embarqué (1), garantir l'omission de la délivrance du code d'initialisation (12-1) .

2. Système selon la revendication 1, **caractérisé en ce que** l'unité de commande (13) est configurée pour amener l'unité d'affichage (12) à afficher sélectivement le code d'initialisation (12-1) ou un code d'identification en fonction de l'état de l'appareil embarqué (1), le code d'identification étant indicatif d'un identifiant du véhicule et/ou d'un identifiant d'un utilisateur (3) de l'appareil embarqué (1).

3. Système selon l'une des revendications précédentes, **caractérisé en ce que** l'unité de commande (13) comprend un générateur de code (131), qui est configuré pour générer le code d'initialisation (12-1) en fonction d'un numéro de série invariable de l'appareil embarqué (1) stocké sur l'appareil embarqué (1) et/ou d'un numéro de série invariable d'un composant de l'appareil embarqué (1) .

4. Système selon l'une des revendications précédentes, **caractérisé en ce que** le code d'initialisation (12-1) comprend au moins l'un des éléments suivants :
- un code alphanumérique ;
- un code à barres ;
- un code QR ;
- un code lisible par machine.

5. Système selon l'une des revendications précédentes, **caractérisé en ce que** l'unité de commande (13) est configurée pour combiner le code d'initialisation (12-1) avec au moins l'un des éléments suivants :
- un chiffre de contrôle ;
- un numéro d'appel d'une installation de traitement de données centrale (2) ;
- une adresse de réseau (par exemple URL) d'un portail d'utilisateur de réseau (5), lequel permet de saisir le code d'initialisation (12-1).

6. Système selon l'une des revendications précédentes, **caractérisé en ce que** l'appareil embarqué (1) possède un dispositif de mémoire (14), l'unité de commande (13) étant configurée pour provoquer une mémorisation des données d'initialisation et/ou de données dérivées des données d'initialisation dans le dispositif de mémoire (14) de l'appareil embarqué (1).

7. Système selon la revendication 6, **caractérisé en ce que** l'initialisation de l'appareil embarqué (1) par l'unité de commande (13) comprend la mémorisation des données d'initialisation et/ou des données dérivées dans le dispositif de mémoire (14).

8. Système selon la revendication 6 ou 7, **caractérisé en ce que** l'unité de commande (13) est configurée pour détecter l'état de l'appareil embarqué (1) par interrogation des données représentatives de l'état de l'appareil embarqué (1) dans le dispositif de mémoire (14) .

9. Système (1) selon l'une des revendications précédentes, **caractérisé en ce que** l'appareil embarqué (1) comporte un dispositif de détermination de position ou est configuré pour être couplé à un dispositif de détermination de position,
- l'unité de commande (1) étant configurée pour, dans l'état initialisé de l'appareil embarqué (1), amener l'unité de communication (11) à envoyer des données de position du dispositif de détermination de position et/ou un résultat de traitement des données de position à l'installation de traitement de données centrale (2) ;
- l'unité de commande (1) étant configurée pour, dans l'état non initialisé de l'appareil embarqué (1), garantir l'omission d'un envoi des données de position du dispositif de détermination de position et l'omission d'un envoi d'un résultat de traitement des données de position.

10. Procédé d'initialisation d'un appareil embarqué (1) dans un système comprenant au moins une installation de traitement de données centrale (2) et au moins un terminal (31) à disposition d'un utilisateur (3) de l'appareil embarqué (1), espacé de l'appareil embarqué (1), l'appareil embarqué (1) étant configuré pour être emporté dans un véhicule et pouvant présenter un état non initialisé, dans lequel l'exécution par l'appareil embarqué (1) d'au moins un processus prédéterminé servant à une fonction de l'appareil embarqué n'est pas possible, ainsi qu'un état initialisé, avec lequel l'exécution du processus prédéterminé par l'appareil embarqué (1) est possible, et l'appareil embarqué (1) comportant :
- une unité de communication (11) qui est configurée pour recevoir et émettre sans fil des données par le biais d'un système de radiocommunication mobile (6) ;
- une unité de commande (13) couplée à l'unité de communication (11) pour commander le fonctionnement de l'appareil embarqué (1) ;
**caractérisé en ce que** le procédé comprend les étapes suivantes :
- au moyen de l'unité de commande (13) : provoquer, dans l'état non initialisé de l'appareil embarqué (1), une délivrance d'un code d'initialisation (12-1) associé à l'appareil embarqué (1) à
∘ l'utilisateur (3) au moyen d'une unité d'affichage (12) couplée à l'unité de commande (13), par le fait que l'unité d'affichage (12) affiche le code d'initialisation (12-1) ;
- saisie du code d'initialisation (12-1) dans le terminal (31) ;
- dans l'installation de traitement des données centrale (2) : réception du code d'initialisation (12-1) par le terminal (31), mise à disposition de données d'initialisation en fonction du code d'initialisation (12-1) reçu et envoi d'un message d'initialisation (11-1) contenant les données d'initialisation à l'appareil embarqué (1) par le biais du système de radiocommunication mobile (6) ;
- au moyen de l'unité de commande (13) : amenée de l'appareil embarqué (1) dans l'état initialisé par initialisation de l'appareil embarqué (1) en fonction des données d'initialisation qui sont contenues dans le message d'initialisation (11-1) de l'installation de traitement de données centrale (2) reçu par l'unité de communication (11) ;
- au moyen de l'unité de commande : garantie, à l'état initialisé de l'appareil embarqué (1), de l'omission de la délivrance du code d'initialisation (12-1).

11. Procédé selon la revendication 10, **caractérisé en ce que**
- dans l'installation de traitement de données centrale (2), en plus du code d'initialisation (12-1), des données relatives à l'utilisateur et/ou au véhicule sont également reçues par le terminal (13) et les données d'initialisation comprennent au moins partiellement les données reçues relatives à l'utilisateur et/ou au véhicule.
